# EUROPÄISCHE PATENTANMELDUNG

(11) **EP 1 495 998 A1**
(43) Veröffentlichungstag der Anmeldung: **12.01.2005**
(21) Anmeldenummer: 03015827.3
(22) Anmeldetag: 10.07.2003
(51) Int. Cl.: B65G 47/90, B65G 61/00, B65H 19/12

(54) **Vorrichtung zum Entpalettieren eines Bobinenstapels mit einem Laserentfernungssensor und Verwendung eines Laserentfernungssensors zur Entpalettierung eines Bobinenstapels**

(71) Anmelder: Hauni Maschinenbau AG, 21033 Hamburg (DE)
(72) Erfinder: Miculic, Josip, 20535 Hamburg (DE); Stöcker, Ralf, 21465 Reinbeck (DE)
(74) Vertreter: Seemann, Ralph, Dr. Dipl.-Phys.

(57) **Zusammenfassung**

Die Erfindung betrifft eine Vorrichtung (10) zum Entpalettieren eines Bobinenstapels (30, 35) mittels eines Greifers (45) sowie eine Verwendung eines Laserentfernungssensors (15).

Die Vorrichtung (10) wird dadurch weitergebildet, dass wenigstens ein Laserentfernungssensor (15) zur Messung der Höhe des Bobinenstapels (30, 35) vorgesehen ist.

## Beschreibung

Die Erfindung betrifft eine Vorrichtung zum Entpalettieren eines Bobinenstapels mittels eines Greifers sowie eine Verwendung eines Laserentfernungssensors.

Auf Verpackungsmaschinen, bspw. Einschlagmaschinen, wird Verpackungsmaterial, wie z.B. Papier, Aluminiumfolie, Kunststofffolie oder Laminatfolie, von Rollen verarbeitet, die auch als Bobinen bezeichnet werden. Diese Bobinen werden zu einer Abspulvorrichtung gebracht und auf diese aufgeschoben. Auch auf tabakverarbeitenden Maschinen, z.B. Zigarettenherstellungsmaschinen, werden Bobinen mit Papier benötigt.

In DE-A-35 01 692 ist eine Vorrichtung zum Entladen einzelner Bobinen von einer Unterlage bzw. Palette offenbart. Hierbei wird eine Greifvorrichtung über Linearantriebe in einer Ebene verfahren, die an einem höhenverstellbaren Rahmen angeordnet ist. Am Rahmen sind Sensoren befestigt, die die Position der in einer Ebene liegenden Bobinen erfassen und die Höhenverstellung des Rahmens steuern. Die Sensoren können dabei jeweils zu einer Bobinenreihe auf einer Palette zugeordnet sein.

Um die Beladung bzw. die Beladungshöhe von Bobinenstapeln auf Paletten zu erfassen, werden diese in der Praxis zunächst mit einem Ultraschallsensor abgetastet. Hierbei wird der Ultraschallsensor mäanderförmig über die mit Bobinen beladene Paletten gefahren. Anschließend wird mit einem Lasertaster der Mittelpunkt einer zu greifenden Bobine ermittelt, wobei sich die Startposition des Lasertasters aus der Messung mit dem Ultraschallsensor ergibt. Der Mittelpunkt einer zu greifenden Bobine wird nachfolgend aus drei Messpunkten der Bobinenaussenkante und drei Messpunkten der Bobineninnenkante ermittelt.

Diese Vorgehensweise hat den Nachteil, dass sie sehr zeitraubend und wegen der beiden Sensoreinrichtungen äußerst aufwendig ist. Dadurch wird eine gewünschte Steigerung der Produktionsgeschwindigkeit verhindert.

Ausgehend von diesem Stand der Technik, ist es Aufgabe der vorliegenden Erfindung, die Lageerkennung von gestapelten Bobinen auf einfache Weise zu verbessern, wobei es möglich sein soll, die Bobinen schneller greifen zu können.

Die Lösung der Aufgabe erfolgt bei einer Vorrichtung zum Entpalettieren eines Bobinenstapels mittels eines Greifers dadurch, dass wenigstens ein Laserentfernungssensor zur Messung der Höhe des Bobinenstapels vorgesehen ist. Bei einer Vorrichtung nach der DE-A-35 01 692 (entspricht US-4,723,884), die vollumfänglich in die vorliegende Patentanmeldung aufgenommen ist, werden Bobinen von einer Unterlage d.h. Palette, auf der die Bobinen in mehreren Reihen nebeneinander und in mehreren Lagen übereinander gestapelt sind, mittels eines Greifers entladen. Der Greifer erfasst gezielt die einzelnen Bobinen und führt sie entweder unmittelbar einer Abspulvorrichtung einer nachgeschalteten Verpackungsmaschine oder einem Transportsystem zu, das die Bobinen zu einer Abspulvorrichtung oder einem der Abspulvorrichtung angeordneten Puffermagazin transportiert.

Mittels des erfindungsgemäßen Laserentfernungssensors wird der Abstand zwischen der obersten Lage der Bobinen und dem Greifer auf einfache und schnelle Weise gemessen. Hierbei sendet der Laserentfernungssensor einen Laserstrahl aus, der vom entfernten Messobjekt (Bobine) reflektiert wird. Diese Laserabstandssensoren wandeln die ermittelte Entfernung in ein proportionales elektrisches Signal um. Durch diese gezielte punktuelle Abstandsmessung ist gewährleistet, dass ein Greifer schnell auf eine zu greifende Bobine zugreifen kann und generell eine gegenüber einer Ultraschallsensormessung, die eine Messkeule aufweist, wodurch eine genaue und gezielte Messung eingeschränkt ist und sehr kleine Flächen nicht erkannt werden, beschleunigte Abstandsmessung möglich ist. Hierdurch wird die Produktionsgeschwindigkeit an einer Vorrichtung deutlich gesteigert.

Insbesondere ist der Laserentfernungssensor zur Ermittlung der Entfernung zwischen dem Bobinenstapel und dem Greifer vorgesehen.

Eine weitere Beschleunigung der Entfernungsmessung wird dadurch erreicht, dass jeder Bobinenreihe des Bobinenstapels ein Laserentfernungssensor zugeordnet ist.

Um die Distanz zwischen der obersten Lage einer Bobine und den Greifer auf einfache Weise zu ermitteln, sind die Laserentfernungssensoren, insbesondere an einem Querträger, nebeneinander angeordnet. Hierdurch wird eine gleichzeitige und parallele Erkennung der Abstände bei nur einer Überfahrt der Bobinenstapel gewährleistet.

Weiterhin ist es günstig, wenn der Laserentfernungssensor am Greifer angeordnet ist, so dass eine kompakte Bauweise des Greifers möglich ist.

Bevorzugterweise ist die Vorrichtung als Portalroboter ausgebildet. Ein Portalroboter besteht aus einem Portal, das sich auf zwei Schienen in Längsrichtung (x-Achse) bewegen kann. Auf dem Querträger des Portals ist eine Laufkatze montiert, die sich quer zur Bewegungsrichtung des Portals bewegen kann (y-Achse). An der Laufkatze ist ein Greifarm montiert, der sich auf und ab bewegt (z-Achse). Am unteren Ende des Greifarms ist eine Greifeinrichtung angeordnet. Derartige Portalroboter haben sich für die Entpalettierung von Bobinenpaletten bewährt. Durch die Anordnung der Laserentfernungssensoren am Portalroboter sind die Sensoren in mindestens eine bzw. alle Raumrichtungen verfahrbar.

Darüber hinaus ist es von Vorteil, wenn eine Steuerung zur Aufnahme und/der Verarbeitung und/oder Speicherung der gemessenen Entfernungswerte vorgesehen ist.

Als weitere Lösung der Aufgabe wird die Verwendung eines Laserentfernungssensors vorgeschlagen, der in einer Vorrichtung zu Entpalettierung eines Bobinenstapels mittels eines Greifers vorgesehen ist, wobei der Laserentfernungssensor zur Entfernungsmessung zwischen dem Bobinenstapel und dem Greifer vorgesehen ist. Der Laserentfernungssensor tastet dabei die oberste Lage der Bobinen ab.

Vorteilhafte Ausgestaltungen der erfindungsgemäßen Verwendung eines Laserentfernungssensors ergeben sich aus dem voranstehend Beschriebenen, auf das zur Vermeidung von Wiederholungen explizit verwiesen wird.

Die Erfindung wird nachstehend ohne Beschränkung des allgemeinen Erfindungsgedankens anhand von Ausführungsbeispielen unter Bezugnahme auf die beigefügten schematischen Zeichnungen exemplarisch beschrieben, auf die im übrigen bzgl. der Offenbarung aller im Text nicht näher erläuterten erfindungsgemäßen Einzelheiten ausdrücklich verwiesen wird. Es zeigen:
- Fig. 1: schematisch eine Draufsicht auf zwei Paletten;
- Fig. 2: eine schematische Darstellung einer Bobine, bei der der Mittelpunkt gemäß dem Stand der Technik ermittelt wird;
- Fig. 3a, Fig. 3b: schematisch eine Draufsicht bzw. Vorderansicht einer erfindungsgemäßen Vorrichtung;
- Fig. 3c: eine Vorderansicht einer Vorrichtung gemäss einer weiteren Ausführung;
- Fig. 4: eine prinzipielle Anordnung von Laserentfernungssensoren;
- Fig. 5: eine kreisförmige Anordnung von Bobinen auf einer Palette und
- Fig. 6: schematisch den Ablauf einer weiteren erfindungsgemäßen Palettenabtastung.

In den Figuren sind jeweils gleiche oder gleichartige Elemente bzw. entsprechende Teile mit denselben Bezugsziffern versehen, so dass von einer entsprechenden erneuten Vorstellung abgesehen wird und lediglich Abweichungen der in diesen Figuren dargestellten Ausführungsbeispiele gegenüber dem ersten Ausführungsbeispiel erläutert werden.

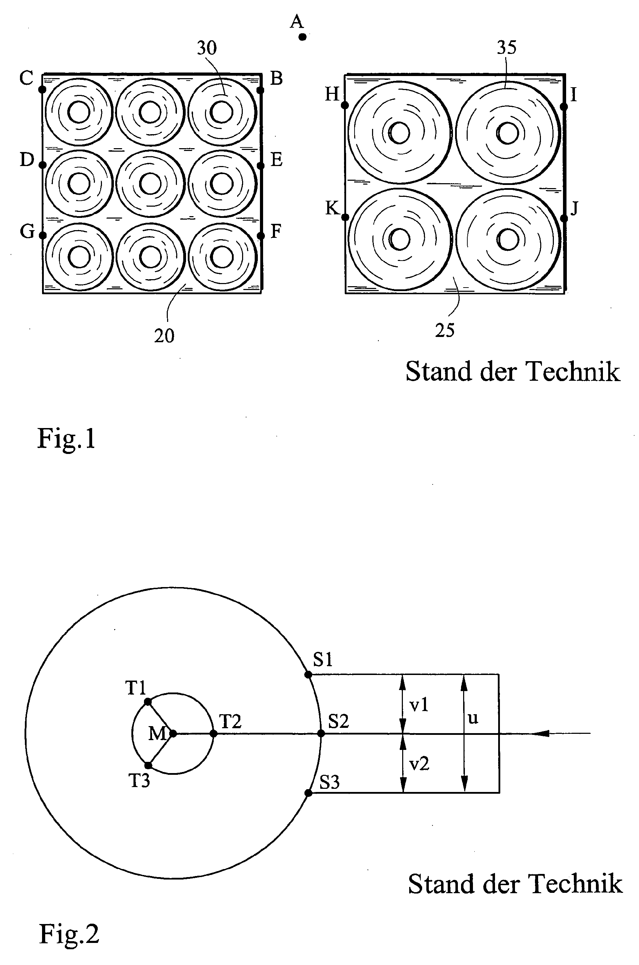

In Fig. 1 und Fig. 2 sind schematisch der Ablauf der Abtastung von Paletten 20, 25 mit Bobinen 30, 35 sowie die Ermittlung des Bobinenmittelpunktes gemäß dem Stand der Technik dargestellt. Hierbei sind die Bobinen 30, 35 auf den Paletten 20, 25 in Reihen nebeneinander und in Lagen übereinander angeordnet.

Die Beladungshöhe der als Unterlage verwendeten Paletten 20, 25 wird gemäß dem Stand der Technik mit einem Ultraschallsensor durch mäanderförmiges Abfahren der einzelnen Paletten 20, 25 ermittelt. Hierbei wird der Ultraschallsensor zusammen mit einem Greifkopf des Roboters, insbesondere Portalroboter, aus einer Parkposition A heraus in Richtung B. Vom Punkt B wird der Ultraschallsensor über die Punkte C, D, E, F nach G verfahren. Hierbei werden die Änderungen in der Stapelhöhe in einer Steuerung gespeichert. Danach fährt der Ultraschallsensor vom Punkt G zurück in die Parkposition A.

Im Anschluss daran fährt der Ultraschallsensor aus der Parkposition A zum Punkt H an der Palette 25 und tastet die Palette 25 in gleicher Weise über die Punkte H, I, J, K schlangenlinienartig bzw. mäanderförmig ab. Aus der Endposition K fährt der Ultraschallsensor schließlich wieder in die anfängliche Parkposition A.

In Fig. 2 ist schematisch der Ablauf zur Ermittlung des Bobinenmittelpunkts M der Bobine 30 dargestellt. Hierzu fährt der Greifkopf des Roboters aus der Parkposition A (Fig. 1) zu der zu greifenden Bobine 30. Der Greifkopf nähert sich dabei an die Bobine 30 an, bis eine Laserlichtschranke des Greifkopfs die Außenkante der Bobine 30 im Punkt S2 feststellt. Anschließend fährt der Greifkopf wieder zurück und wird um die Strecke v1 versetzt. Danach wird der Greifkopf wieder in Richtung der Bobine 30 angenähert, bis die Laserlichtschranke die Außenkante der Bobine in Punkt S1 registriert. Darauf wird der Greifkopf wieder zurückgefahren und versetzt um die Strecke u wieder in Richtung der Bobine 30 angenähert, bis die Lichtschranke die Außenkante der Bobine 30 im Punkt S3 feststellt. Nachfolgend wird der Greifkopf zurückgefahren und um die Strecke v2 versetzt.

Aus den Koordinaten der Punkte S1, S2 und S3 berechnet die Steuerung den Durchmesser der Bobine 30.

Im Anschluss daran wird der Greifkopf aus dem Punkt S2 in Richtung des Bobinenmittelpunkts M verfahren. Die Steuerung speichert dabei die Koordinaten des Punkte T2, an dem die Laserlichtschranke den Übergang von Material auf den Bobinenkern feststellt. Vom Punkt T2 wird der Greifkopf über den Punkt M zum Punkt T1 verfahren, bis wiederum die Lichtschranke den Übergang vom Material auf den Bobinenkern erkennt. Schließlich wird vom Punkt M aus der Greifkopf über den Punkt T3 hinaus verfahren und anschließend zurück über den Punkt T3 wieder in Richtung des Bobinenmittelpunkts M bewegt, bis die Lichtschranke wiederum den Übergang vom Material auf den Bobinenkern feststellt.

Aus den Koordinaten der Punkte T1, T2 und T3 berechnet die Steuerung die exakten Koordinaten des Bobinenmittelpunktes M.

Dieses Verfahren gemäß dem Stand der Technik ist insgesamt sehr zeitaufwendig, so dass die Produktionsgeschwindigkeit nicht gesteigert werden kann. Darüber hinaus erfordert dieses Verfahren ein fest vorgegebenes Bobinenmuster, wodurch die Anzahl der möglichen Bobinenmuster beschränkt ist.

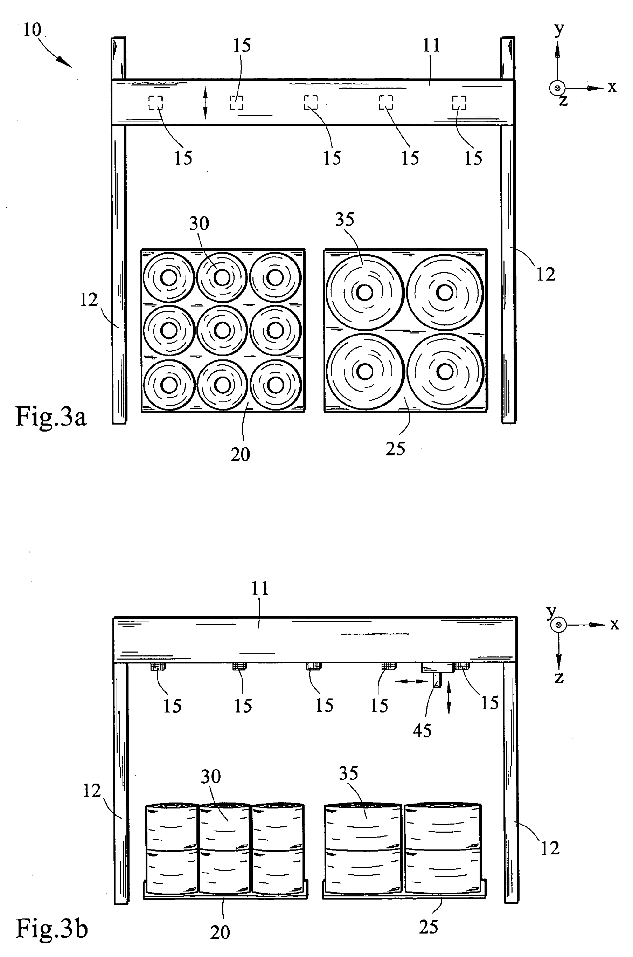

In Fig. 3a ist eine Draufsicht auf eine erfindungsgemäße Vorrichtung 10 zum Entpalettieren von Bobinenstapeln 30, 35 schematisch dargestellt. In Fig. 3b ist eine Vorderansicht der Vorrichtung 10 gezeigt. Eine derartige Vorrichtung 10 wird allgemein auch als Portalroboter bezeichnet.

Die Vorrichtung 10 zum Entpalettieren von Bobinenstapeln 30, 35 verfügt über ein Rahmengestell 12 mit einem horizontal verfahrbaren Querträger 11. Der Querträger 11 ist zwischen den Trägern des Rahmengestells 12 angeordnet. Zwischen dem Rahmengestell 12 sind zwei Paletten 20, 25 mit gestapelten Bobinen 30, 35 platziert.

Unterhalb des Querträgers 11 sind entsprechend den Abständen zwischen Reihen der Bobinen auf den Paletten 20, 25 Laser-Analog-Sensoren 10 als Laserentfernungssensoren angeordnet, um die Paletten 20, 25 abzutasten, um die Höhe bzw. die Entfernung des Querträgers 11 bzw. der am Querträger 11 angeordneten Greifvorrichtung 45 zu der obersten Lage der Bobinen 30, 35 zu ermitteln. Die Laser-Analog-Sensoren messen mittels Phasenkorrelation die Lichtlaufzeit bis zu einer Entfernung von zwei Metern mit einer Auflösung im Millimeterbereich.

Erfindungsgemäß werden durch die Laserentfernungssensoren 15 die Bobinensuchdauer und eine nachfolgende Ermittlung der Mittelpunkte der Bobinen 30, 35 auf ein Minimum reduziert, wodurch die Produktionsgeschwindigkeit der Vorrichtung gesteigert wird.

Die Vorrichtung 10 (Fig. 3b) verfügt ferner über eine Greifvorrichtung 45, mittels der die Bobinen 30, 35 von den Paletten 20, 25 entnommen werden und einer Abspulvorrichtung oder einem Puffermagazin zugeführt werden.

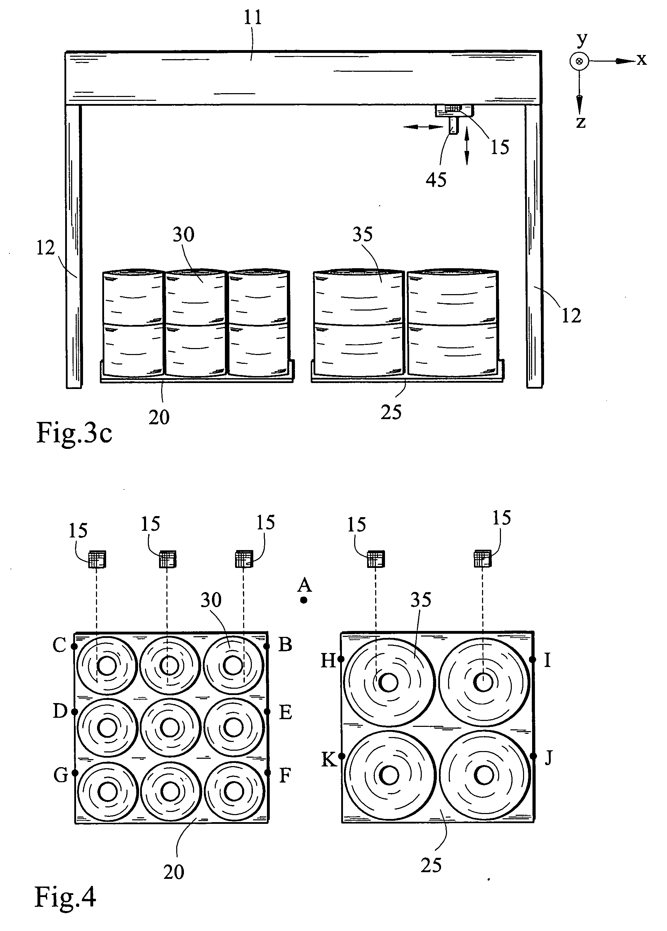

Bei dem in Fig. 3b dargestellten Ausführungsbeispiel sind mehrere Laser-Analog-Sensoren 15 am Querträger 11 des Portalroboters angeordnet. In Fig. 3c ist eine weitere erfindungsgemäße Ausgestaltung der Vorrichtung 10 gezeigt, bei der nur ein Laser-Analog-Sensor 15 am Greifer 45 angeordnet ist, so dass der Laser-Analog-Sensor 15 und der Greifer 45 als eine Baueinheit ausgebildet sind. Dadurch wird der Sensor 15 zusammen mit dem Greifer 45 mitbewegt.

In Fig. 4 ist eine prinzipielle Anordnung von Laser-Analog-Sensoren bzw. Laserentfernungssensoren 15 dargestellt. Diese Anordnung wird vorzugsweise dann eingesetzt, wenn mehr als zwei Paletten 20, 25 abgetastet werden. Hierbei sind die Bobinen 30, 35 in Reihen auf den Paletten 20, 25 angeordnet.

Für jede Bobinenreihe auf den Paletten 20, 25 wird ein Laserentfernungssensor 15 am Träger (vergleiche Querträger 11, Fig. 3a) der zur Palettenreihe parallelen Achse angeordnet. Zur Abtastung der Bobinenstapel 30, 35 überfährt der Träger mit den Laser-Analog-Sensoren 15 nur einmal die Paletten, so dass nach einer einzigen Überfahrt die Höhenwerte bzw. Entfernungswerte von einer Steuerung aufgenommen, verarbeitet und gespeichert werden.

Die Abstandswerte werden den jeweiligen Achspositionen während der Messfahrt zugeordnet. Da die Positionen der Sensoren 15 als Parameter bekannt sind, ist die oberste Position jedes Bobinenstapels dreidimensional bekannt, so dass von der Greifvorrichtung des Portalroboters eine zu greifende Bobine gezielt angefahren wird.

Durch die Verwendung von Laserentfernungssensoren wird die Zeit für die Höhenermittlung bzw. Entfernungsermittlung deutlich verkürzt. Außerdem wird eine höhere Genauigkeit durch die Lasersensoren erzielt. Die Anzahl der Laserentfernungssensoren 15 entspricht der Anzahl der Bobinenstapelreihen, wobei die Entfernungssensoren justierbar angeordnet sind, um eine Anpassung an die jeweiligen Mittellinien der Bobinenstapel zu ermöglichen.

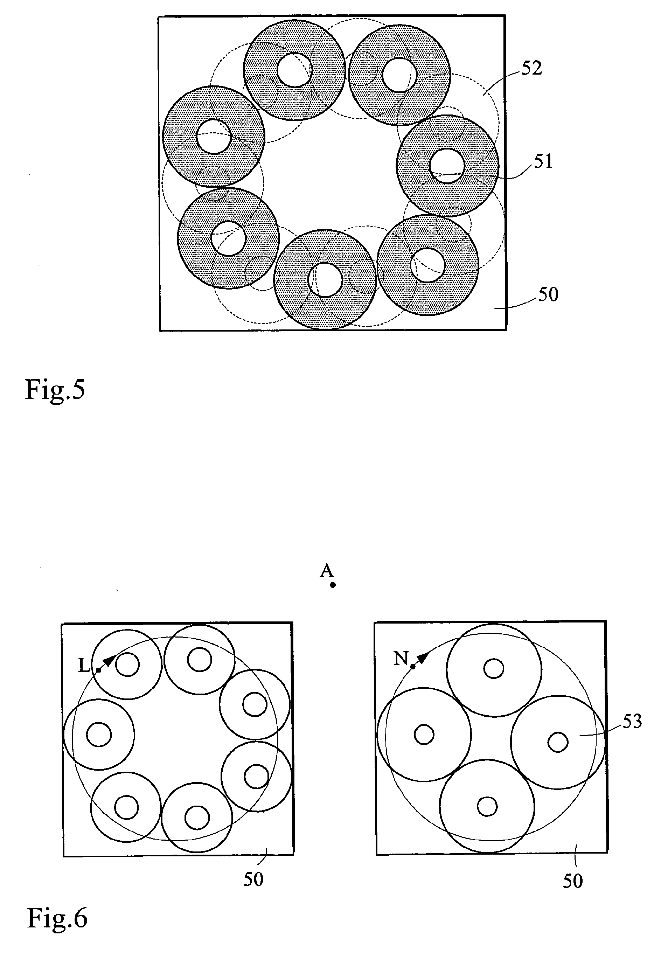

In Fig. 5 ist eine kreisförmige Anordnung von Bobinen 51, 52 auf einer Palette 50 dargestellt. Auf der Palette 50 sind die Bobinen 51, 52 in mehreren Lagen angeordnet. Die gestrichelt dargestellten Bobinen 52 bilden die untere Lage, die grau gefärbten Bobinen 51 liegen obenauf.

In Fig. 6 ist der schematische Ablauf einer Abtastung von Paletten dargestellt, wobei die Bobinen auf den Paletten kreisförmig angeordnet sind. Hierbei fährt der Greifkopf des Portalroboters mit dem daran angeordneten Laser-Analog-Sensor aus der Parkposition A heraus zum Punkt L. Nach Aktivierung des Laser-Analog-Sensors führt der Greifkopf oberhalb der Bobinen 51 eine kreisförmige Bahn über der Palette 50 aus, bis er den Ausgangspunkt L wieder erreicht. Während dieser Fahrt werden innerhalb kurzer Wegintervalle die Abstandswerte bzw. Entfernungen und die zugehörigen Koordinatenwerte in einer Datenbank abgespeichert. Danach ermittelt die Steuerung aus den Messdaten die Startposition für eine anschließende Suchfahrt mit einem Laserlichttaster.

Im Anschluss daran wird der Greifkopf vom Punkt L zur Parkposition A bewegt. In einem weiteren Schritt fährt der Greifkopf aus der Parkposition A zum Punkt N oberhalb einer Palette mit Bobinen 53 und tastet die Palette in gleicher Weise ab. Aus der Abtastung der kreisförmig angeordneten Bobinen wird die Startposition für eine nachfolgende Lasersuchfahrt ermittelt.

Somit eignet sich die Erfindung auch für Bobinenanordnungen, bei denen die Bobinen nicht in einer Reihe liegen.

Die erfindungsgemäße Vorrichtung verfügt über eine Steuerung, die von den Laser-Analog-Sensoren die Messwerte empfängt und jedem Messwert entsprechende Koordinaten zuordnet. Ferner werden die Messwerte in einer Datenbank abgespeichert, so dass auf der Grundlage dieser Datenbank die Anfahrpositionen für das Ausmessen der Bobinenkerne ermittelt werden.

Durch das Vorsehen von Laserentfernungssensoren und deren Anordnung an einem horizontal verfahrbaren Träger wird der Beladungszustand von Paletten mit Bobinen auf einfache Weise festgestellt, so dass die Produktionsgeschwindigkeit an einer Entpalettiervorrichtung erhöht wird. Eine weitere Steigerung wird durch eine gleichzeitige Abtastung aller Bobinenreihen bei einer Verfahrbewegung des Trägers erzielt.

### Bezugszeichenliste

- 10: Vorrichtung
- 11: Querträger
- 12: Rahmengestell
- 15: Laserentfernungssensor
- 20: Palette
- 25: Palette
- 30: Bobine
- 35: Bobine
- 45: Greifvorrichtung
- 50: Palette
- 51: Bobine
- 52: Bobine
- 53: Bobine

## Patentansprüche

1. Vorrichtung (10) zum Entpalettieren eines Bobinenstapels (30, 35) mittels eines Greifers (45), **dadurch gekennzeichnet, dass** wenigstens ein Laserentfernungssensor (15) zur Messung der Höhe des Bobinenstapels (30, 35) vorgesehen ist.

2. Vorrichtung (10) nach Anspruch 1, **dadurch gekennzeichnet, dass** der Laserentfernungssensor (15) zur Ermittlung der Entfernung zwischen dem Bobinenstapel (30, 35) und dem Greifer (45) vorgesehen ist.

3. Vorrichtung (10) nach Anspruch 1 oder 2, **dadurch gekennzeichnet, dass** jeder Bobinenreihe des Bobinenstapels (30, 35) ein Laserentfernungssensor (15) zugeordnet ist.

4. Vorrichtung (10) nach einem der Ansprüche 1 bis 3, **dadurch gekennzeichnet, dass** die Laserentfernungssensoren (15), insbesondere an einem Querträger (11), nebeneinander angeordnet sind.

5. Vorrichtung (10) nach einem oder mehreren der Ansprüche 1 bis 4, **dadurch gekennzeichnet, dass** der Laserentfernungssensor (15) am Greifer (45) angeordnet ist.

6. Vorrichtung (10) nach einem oder mehreren der Ansprüche 1 bis 5, **dadurch gekennzeichnet, dass** die Vorrichtung (10) als Portalroboter (10) ausgebildet ist.

7. Vorrichtung (10) nach einem oder mehreren der Ansprüche 1 bis 6, **dadurch gekennzeichnet, dass** eine Steuerung zur Aufnahme und/oder Verarbeitung und/oder Speicherung der Entfernungswerte der Laserentfernungssensoren (15) vorgesehen ist.

8. Verwendung eines Laserentfernungssensors (15) in einer Vorrichtung (10) zur Entpalettierung eines Bobinenstapels (30, 35) mittels eines Greifers (45), wobei der Laserentfernungssensor (15) zur Entfernungsmessung zwischen dem Bobinenstapel (30, 35) und dem Greifer (45) vorgesehen ist.

9. Verwendung nach Anspruch 8, **dadurch gekennzeichnet, dass** jeder Reihe des Bobinenstapels (30, 35) ein Laserentfernungssensor (15) zugeordnet.

10. Verwendung nach Anspruch 8 oder 9, **dadurch gekennzeichnet, dass** die Laserentfernungssensoren (15), insbesondere an einem Querträger (11), nebeneinander angeordnet sind.

11. Verwendung nach einem oder mehreren der Ansprüche 8 bis 10, **dadurch gekennzeichnet, dass** die Vorrichtung (10) als Portalroboter ausgebildet ist.

12. Verwendung nach einem oder mehreren der Ansprüche 7 bis 11, **dadurch gekennzeichnet, dass** eine Steuerung zur Aufnahme und/oder Verarbeitung und/oder Speicherung der Entfernungswerte der Laserentfernungssensoren (15) vorgesehen ist.
